(19) Europäisches Patentamt
European Patent Office
Office européen des brevets

(11) **EP 2 918 631 A1**

(12) **EUROPEAN PATENT APPLICATION**
published in accordance with Art. 153(4) EPC

(43) Date of publication:
**16.09.2015 Bulletin 2015/38**

(51) Int Cl.:
*C08J 9/36* [(2006.01)]     *H01M 2/16* [(2006.01)]

(21) Application number: **13852901.1**

(86) International application number:
**PCT/JP2013/079584**

(22) Date of filing: **31.10.2013**

(87) International publication number:
**WO 2014/073451 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2012 JP 2012244121**
**17.09.2013 JP 2013192403**

(71) Applicant: **Sekisui Chemical Co., Ltd.**
**Osaka 530-8565 (JP)**

(72) Inventors:
• **SAWADA Takahiko**
**Mishima-gun**
**Osaka 618-0021 (JP)**
• **TADA Hiroshi**
**Mishima-gun**
**Osaka 618-0021 (JP)**

(74) Representative: **Ter Meer Steinmeister & Partner**
**Patentanwälte mbB**
**Nymphenburger Straße 4**
**80335 München (DE)**

(54) **HEAT-RESISTANT SYNTHETIC RESIN MICROPOROUS FILM AND PROCESS FOR PRODUCING SAME, SEPARATOR FOR NON-AQUEOUS ELECTROLYTE SECONDARY BATTERY, AND NON-AQUEOUS ELECTROLYTE SECONDARY BATTERY**

(57) A heat-resistant synthetic resin microporous film is provided which is excellent in both heat resistance and permeability to ions such as lithium ions and does not make its production line dirty. A method of producing the heat-resistant synthetic resin microporous film is also provided. The production method of a heat-resistant synthetic resin microporous film includes causing 5 to 25 parts by weight of a radical-polymerizable monomer including a trifunctional or higher polyfunctional acrylic monomer to adhere to 100 parts by weight of a synthetic resin microporous film, and then irradiating the synthetic resin microporous film with ionizing radiation at an absorbed dose of 10 to 150 kGy.

EP 2 918 631 A1

**Description**

Technical Field

The present invention relates to a method of producing a heat-resistant synthetic resin microporous film used for a separator of a non-aqueous electrolyte secondary battery such as a lithium ion battery, to a heat-resistant synthetic resin microporous film, to a separator for a non-aqueous electrolyte secondary battery, and to a non-aqueous electrolyte secondary battery.

Background Art

Lithium ion secondary batteries have conventionally been used as power sources of portable electronic devices. Such a lithium ion battery is generally configured by placing a positive electrode, a negative electrode, and a separator in an electrolyte. The positive electrode is formed by coating the surface of an aluminum foil with lithium cobaltate or lithium manganate. The negative electrode is formed by coating the surface of a copper foil with carbon. The separator is disposed so as to separate the positive and negative electrodes from each other, so that an electric short circuit between the electrodes is prevented.

During charging of a lithium ion battery, lithium ions are released from the positive electrode and move into the negative electrode. During discharging of the lithium ion battery, lithium ions are released from the negative electrode and move toward the positive electrode.

A polyolefin-based resin microporous film is used as the separator because of its high insulating properties and cost advantage. However, the polyolefin-based resin microporous film heat-shrinks greatly near the melting point of the polyolefin-based resin. When, for example, a metal foreign body entering the battery breaks the separator and causes a short circuit between the electrodes, Joule heat is generated and results in an increase in the temperature of the battery, and this causes thermal shrinkage of the polyolefin-based resin microporous film. The thermal shrinkage of the polyolefin-based resin microporous film causes the extent of the short circuit to increase, and therefore the increase in the battery temperature becomes larger.

In recent years, there is a demand for a high-power lithium ion battery with high safety ensured. Therefore, also the separator is required to have improved heat resistance.

Patent Literature 1 discloses a lithium secondary battery separator treated with electron beam irradiation and having a thermomechanical analysis (TMA) value at 100°C of 0% to -1%. However, the heat resistance and mechanical strength of the lithium secondary battery separator only treated with electron beam irradiation are insufficient.

Patent Literature 2 discloses a porous film in which a cross-linked polymer formed from divinylbenzene or divinylbenzene and ethylvinylbenzene is held on at least part of the surface of a porous film formed from polyethylene or polypropylene. This porous film is used as a separation membrane in the fields of water purification, blood treatment, air cleaning, food industry, etc.

However, when the technology disclosed in Patent Literature 2 is simply applied to a separator, the separator is not sufficiently cross-linked, so that sufficient heat resistance is not imparted to the separator.

When the amount of divinylbenzene held in the separator is increased in order to impart sufficient heat resistance to the separator, the pores in the separator may be clogged because the pores in the separator are significantly smaller than the pores in a separation membrane, and this causes a reduction in permeability to lithium ions. Such a separator cannot be used for a lithium ion battery.

Patent Literature 3 discloses a separator including a porous base having a large number of pores and a porous coating layer that is coated onto at least one side of the porous base and contains inorganic particles and a cross-linked binder.

However, the inorganic particles contained in the porous coating layer may fall off the surface of the porous base during production of a battery, making its production line dirty.

Citation List

Patent Literature

Patent Literature 1: Japanese Patent Application Laid-Open No. 2003-22793
Patent Literature 2: Japanese Patent Application Laid-Open No. Hei. 3-193125
Patent Literature 3: Japanese Translation of PCT International Application No. 2011-505663

Summary of Invention

Technical Problem

The present invention provides a heat-resistant synthetic resin microporous film that is excellent in both heat resistance and ion permeability such as lithium ions and does not make the production line dirty and also provides a method of producing the microporous film. The present invention also provides a separator for a non-aqueous electrolyte secondary battery and a non-aqueous electrolyte secondary battery that use the above heat-resistant synthetic resin microporous film.

Means for Solving Problem

The production method of a heat-resistant synthetic resin microporous film according to the present invention includes: applying a radical-polymerizable monomer including a trifunctional or higher polyfunctional acrylic monomer to a surface of a synthetic resin microporous film to thereby cause 5 to 80 parts by weight of the radical-polymerizable monomer to adhere to 100 parts by weight of the synthetic resin microporous film; and then irradiating the synthetic resin microporous film with ionizing radiation at an absorbed dose of 10 to 150 kGy.

The synthetic resin microporous film used in the present invention contains a synthetic resin. The synthetic resin microporous film also includes micropores piercing the film in its thickness direction. The micropores impart high ion permeability to the heat-resistant synthetic resin microporous film. Therefore, the heat-resistant synthetic resin microporous film allows ions such as lithium ions to pass therethrough in its thickness direction.

The thickness of the synthetic resin microporous film is preferably 5 to 100 $\mu$m and more preferably 10 to 50 $\mu$m.

In the present invention, the thickness of the synthetic resin microporous film is measured in the following manner. The measurement is performed at 10 arbitrary points in the synthetic resin microporous film using a dial gage, and the arithmetic average of the measured values is used as the thickness of the synthetic resin microporous film.

The air permeability of the synthetic resin microporous film is preferably 50 to 600 sec/100 mL and more preferably 100 to 300 sec/100 mL. The synthetic resin microporous film, in which its air permeability is within the above range, provides a heat-resistant synthetic resin microporous film excellent in both mechanical strength and ion permeability.

The air permeability of the synthetic resin microporous film is a value obtained as follows. Measurement is performed at 10 points at 10 cm intervals in the length direction of the synthetic resin microporous film in an atmosphere of a temperature of 23°C and a relative humidity of 65% according to JIS P8117, and the arithmetic average of the measured values is used as the air permeability.

The surface porosity of the synthetic resin microporous film is preferably 25 to 55% and more preferably 30 to 50%. The synthetic resin microporous film, in which its surface porosity is within the above range, provides a heat-resistant synthetic resin microporous film excellent in both mechanical strength and ion permeability.

The surface porosity of the synthetic resin microporous film is measured in the following manner. First, a flat rectangular measurement area of 9.6 $\mu$m length $\times$ 12.8 $\mu$m width is defined in an arbitrary portion on the surface of the synthetic resin microporous film, and a photograph of this measurement area is taken at a magnification of 10,000X.

Next, each of micropores formed in the measurement area is surrounded by a rectangle with one of its long and short sides parallel to the length direction (stretching direction) of the synthetic resin microporous film. This rectangle is adjusted such that both the long and short sides are minimized. The area of the rectangle is used as the opening area of the micropore. The opening areas of the micropores are summed to compute the total opening area S ($\mu$m$^2$) of the micropores. A value obtained by dividing the total opening area S ($\mu$m$^2$) of the micropores by 122.88 $\mu$m$^2$ (9.6 $\mu$m $\times$ 12.8 $\mu$m) and then multiplying the result by 100 is used as the surface porosity (%). For micropores present across the boundary between the measurement area and the area other than the measurement area, only portions of the micropores that are present within the measurement area are used as measurement objects.

The maximum of the major axes of the opening ends of the micropores in the synthetic resin microporous film is preferably 1 $\mu$m or less and more preferably 100 nm to 800 nm. The synthetic resin microporous film, in which the maximum of the major axes of the opening ends of the micropores is 1 $\mu$m or less, provides a heat-resistant synthetic resin microporous film excellent in mechanical strength and having uniform ion permeability. In such a heat-resistant synthetic resin microporous film, the occurrence of a minute internal short circuit (dendritic short circuit) caused by growth of dendrite (dendritic crystals) is reduced.

The average major axis of the opening ends of the micropores in the synthetic resin microporous film is preferably 500 nm or less and more preferably 200 nm to 500 nm. The synthetic resin microporous film, in which the average major axis of the opening ends of the micropores is 500 nm or less, provides a heat-resistant synthetic resin microporous film having uniform ion permeability.

The maximum major axis and average major axis of the opening ends of the micropores in the synthetic resin microporous film is measured as follows. First, the surface of the synthetic resin microporous film is coated with carbon. Next, photographs of 10 arbitrary portions on the surface of the synthetic resin microporous film are taken at a magnification of 10,000X using a scanning electron microscope. The imaging area on the surface of the synthetic resin microporous film is a flat rectangular area of 9.6 $\mu$m length $\times$ 12.8 $\mu$m width.

The major axis of the opening end of each of the micropores present in the obtained photograph is measured. The largest one of the major axes of the opening ends of the micropores is used as the maximum major axis of the opening ends of the micropores. The arithmetic average of the major axes of the opening ends of the micropores is used as the average major axis of the opening ends of the micropores. The major axis of the opening end of a micropore is the diameter of a smallest diameter perfect circle that can surround the opening end of the micropore. Micropores present across the boundary between the imaging area and the area other than the imaging area are excluded from the measurement objects.

The pore density of the synthetic resin microporous film is preferably 15 pores/$\mu$m$^2$ or more and more preferably 17 pores/$\mu$m$^2$ or more. The synthetic resin microporous film with a pore density of 15 pores/$\mu$m$^2$ or more has high ion permeability.

The pore density of the synthetic resin microporous film is measured in the following manner. First, a flat rectangular measurement area of 9.6 $\mu$m length $\times$ 12.8 $\mu$m width is defined in an arbitrary portion on the surface of the synthetic resin microporous film, and a photograph of this measurement area is taken at a magnification of 10,000X. Then the number of micropores in the measurement area is measured and divided by 122.88 $\mu$m$^2$ (9.6 $\mu$m $\times$ 12.8 $\mu$m), whereby the pore density is computed.

No particular limitation is imposed on the synthetic resin microporous film, and any porous film used as a separator in a conventional secondary battery such as a lithium ion battery may be used. Preferably, the synthetic resin microporous film is an olefin-based resin microporous film. In the olefin-based resin microporous film, the olefin-based resin may be melted at high temperature, and this is likely to cause deformation and thermal shrinkage. However, the coating layer of the present invention impart high heat resistance to the olefin-based resin microporous film, as described later. Therefore, the formation of the coating layer on the olefin-based resin microporous film achieves the effects of the present invention at a higher level.

The olefin-based resin microporous film contains an olefin-based resin. The olefin-based resin is preferably an ethylene-based resin or a propylene-based resin and more preferably a propylene-based resin.

Examples of the propylene-based resin include homo-polypropylene and copolymers of propylene and other olefins. When the synthetic resin microporous film is produced by a stretching method described later, homo-polypropylene is preferred. Only one type of propylene-based resin may be used, or a combination of two or more types may be used. The copolymers of propylene and other olefins may be any of block copolymers and random copolymers.

Examples of the olefins copolymerized with propylene include $\alpha$-olefins such as ethylene, 1-butene, 1-pentene, 4-methyl-1-pentene, 1-hexene, 1-octene, 1-nonene, and 1-decene, and ethylene is preferred.

An example of an indicator indicating the crystallinity of homo-polypropylene is an isotactic pentad fraction (mmmm fraction) measured by a $^{13}$C-NMR method. The isotactic pentad fraction of the homo-polypropylene measured by the $^{13}$C-NMR method is the ratio of sections occupied by stereo structures with respect to the entire molecular chain of the homo-polypropylene, the stereo structure in which, a main chain is formed from carbon-carbon bonds composed of arbitrary five successive propylene units, and five methyl groups thereof serving as side chains are all oriented in the same direction with respect to the main chain.

The isotactic pentad fraction of the homo-polypropylene measured by the $^{13}$C-NMR method is preferably 90% or higher and more preferably 95% or higher. The isotactic pentad fraction of 90% or higher provides a synthetic resin microporous film with micropores formed uniformly.

The weight average molecular weight of the olefin-based resin is preferably 250,000 to 500,000 and more preferably 280,000 to 480,000. The olefin-based resin, in which its weight average molecular weight is set within the above range, provides an olefin-based resin microporous film excellent in film-forming stability and including uniformly formed micropores.

The molecular weight distribution (weight average molecular weight Mw/number average molecular weight Mn) of the olefin-based resin is preferably 7.5 to 12 and more preferably 8 to 11. The olefin-based resin, in which its molecular weight distribution is set within the above range, provides an olefin-based resin microporous film having a high surface porosity and excellent in mechanical strength.

The weight average molecular weight and number average molecular weight of the olefin-based resin are polystyrene-equivalent values measured by GPC (gel permeation chromatography). Specifically, 6 to 7 mg of the olefin-based resin is collected, and the collected olefin-based resin is supplied to a test tube. Then an o-DCB (ortho-dichlorobenzene) solution containing 0.05% by weight of BHT (dibutylhydroxytoluene) is added to the test tube to dilute the olefin-based resin such that the concentrate of the olefin-based resin is 1 mg/mL, whereby a diluted solution is prepared.

The prepared diluted solution is shaken using a dissolution and filtration apparatus at 145°C and a number of revolution of 25 rpm for 1 hour to dissolve the olefin-based resin in the o-DCB solution, and the resultant solution is used as a measurement sample. The weight average molecular weight and number average molecular weight of the olefin-based resin are measured by GPC using this measurement sample.

The weight average molecular weight and number average molecular weight of the olefin-based resin are measured, for example, using the following measurement apparatus under the following measurement conditions.

Measurement apparatus: Product name "HLC-8121GPC/HT" manufactured by TOSOH Corporation
Measurement conditions: column: TSKgelGMHHR-H(20)HT $\times$ 3 TSKguardcolumn-HHR(30)HT $\times$ 1
Mobile phase: o-DCB 1.0 mL/min
Sample concentration: 1 mg/mL
Detector: Bryce type refractometer
Reference material: polystyrene (manufactured by TOSOH Corporation, molecular weight: 500 to 8,420,000)
Elution condition: 145°C
SEC temperature: 145°C

The melting point of the olefin-based resin is preferably 160 to 170°C and more preferably 160 to 165°C. The olefin-based resin, in which its melting point is set within the above range, provides an olefin-based resin microporous film excellent in film-forming stability with suppressed reduction of mechanical strength at high temperature.

The synthetic resin microporous film is more preferably an olefin-based resin microporous film produced by a stretching method. The olefin-based resin microporous film produced by the stretching method is likely to undergo, in particular, thermal shrinkage at high temperature due to residual strain caused by stretching. However, the coating layer in the present invention imparts high heat resistance to the olefin-based resin microporous film, as described later. Therefore, the formation of the coating layer on the olefin-based resin microporous film produced by the stretching method achieves the effects of the present invention at a higher level.

Specific examples of the method of producing the olefin-based resin microporous film by the stretching method include: (1) a method including the steps of extruding an olefin-based resin to obtain an olefin-based resin film, generating and growing lamella crystals in the olefin-based resin film, and stretching the olefin-based resin film to separate the lamella crystals from each other, whereby an olefin-based resin microporous film having micropores formed therein is obtained; and (2) a method including the steps of extruding an olefin-based resin composition containing an olefin-based resin and a filler to obtain an olefin-based resin film and stretching the olefin-based resin film uniaxially or biaxially to separate the olefin-based resin from the filler at their interfaces, whereby an olefin-based resin microporous film having micropores formed therein is obtained. The method (1) is preferred because an olefin-based resin microporous film with a large number of micropores uniformly formed is obtained.

Particularly preferred examples of the method of producing the olefin-based resin microporous film include a method including the following steps:

an extruding step of melting and kneading an olefin-based resin in an extruder at a temperature equal to or higher than a temperature higher by 20°C than the melting point of the olefin-based resin and equal to or lower than a temperature higher by 100°C than the melting point of the olefin-based resin and then extruding the resultant olefin-based resin from a T die attached to the end of the extruder to thereby obtain an olefin-based resin film;
an aging step of, after the extruding step, aging the olefin-based resin film at a temperature equal to or higher than a temperature lower by 30°C than the melting point of the olefin-based resin and equal to or lower than a temperature lower by 1°C than the melting point of the olefin-based resin;
a first stretching step of, after the aging step, stretching the olefin-based resin film uniaxially at a stretching ratio of 1.2 to 1.6 at a surface temperature of-20°C or higher and lower than 100°C;
a second stretching step of stretching the olefin-based resin film subjected to stretching in the first stretching step uniaxially at a stretching ratio of 1.2 to 2.2 at a surface temperature of 100 to 150°C; and
an annealing step of annealing the olefin-based resin film subjected to stretching in the second stretching step.

The above method produces an olefin-based resin microporous film having a large number of micropores passing therethrough in the direction of the thickness of the film. Such an olefin-based resin microporous film provides a heat-resistant synthetic resin microporous film having high air permeability and allowing ions such as lithium ions to permeate the film smoothly and uniformly. Therefore, such a heat-resistant synthetic resin microporous film reduces the internal resistance of a secondary battery. Such a secondary battery can be charged and discharged at a high current density in high-power applications such as vehicles including electric cars etc. In addition, even when an anomaly such as overcharging or an internal short circuit occurs and the temperature inside the secondary battery increases, the occurrence of an electric short circuit between the electrodes is highly suppressed. Therefore, in this secondary battery, high safety is ensured.

(Extruding step)

The olefin-based resin film containing the olefin-based resin is produced by supplying the olefin-based resin to the extruder, melting and kneading the olefin-based resin, and then extruding the resultant olefin-based resin from the T die attached to the end of the extruder.

The temperature of the olefin-based resin when it is melted and kneaded in the extruder is preferably equal to or higher than a temperature higher by 20°C than the melting point of the olefin-based resin and equal to or lower than a temperature higher by 100°C than the melting point of the olefin-based resin, more preferably equal to or higher than a temperature higher by 25°C than the melting point of the olefin-based resin and equal to or lower than a temperature higher by 80°C than the melting point of the olefin-based resin, and particularly preferably equal to or higher than a temperature higher by 25°C than the melting point of the olefin-based resin and equal to or lower than a temperature higher by 50°C than the melting point of the olefin-based resin. The setting of the temperature of the olefin-based resin during melting and kneading to a temperature equal to or higher than a temperature higher by 20°C than the melting point of the olefin-based resin provides an olefin-based resin microporous film having a uniform thickness. The setting of the temperature of the olefin-based resin during melting and kneading to a temperature equal to or lower than a temperature higher by 100°C than the melting point of the olefin-based resin improves the orientation of the olefin-based resin, and facilitates the generation of lamellas.

The extrusion draw ratio when the olefin-based resin is extruded from the extruder into a film is preferably 50 to 300, more preferably 65 to 250, and particularly preferably 70 to 250. The extrusion draw ratio of 50 or higher increases the tension applied to the olefin-based resin. In this manner, the olefin-based resin is oriented sufficiently to facilitate the generation of lamellas. The extrusion draw ratio of 300 or less improves the film-forming stability of the olefin-based resin film. In this manner, an olefin-based resin microporous film having a uniform thickness and a uniform width is obtained.

The extrusion draw ratio is a value obtained by dividing the clearance of the lip of the T die by the thickness of the olefin-based resin film extruded from the T die. The clearance of the lip of the T die is measured as follows. The measurement of the clearance of the lip of the T die is performed at at least 10 points using a feeler gauge according to JIS B7524 (for example, JIS feeler gauge manufactured by Nagai Gauges), and the arithmetic average of the measured values is computed. The thickness of the olefin-based resin film extruded from the T die is measured as follows. The measurement of the thickness of the olefin-based resin film extruded from the T die is performed at at least 10 points using a dial gauge (for example, Signal ABS Digimatic Indicator, manufactured by Mitutoyo Corporation), and the arithmetic average of the measured values is computed.

The film-forming rate of the olefin-based resin film is preferably 10 to 300 m/minute, more preferably 15 to 250 m/minute, and particularly preferably 15 to 30 m/minute. The film-forming rate of the olefin-based resin film of 10 m/minute or higher improves the tension applied to the olefin-based resin. In this manner, the olefin-based resin is oriented sufficiently to facilitate the generation of lamellas. The film-forming rate of the olefin-based resin film of 300 m/minute or lower improves the film-forming stability of the olefin-based resin film. In this manner, an olefin-based resin microporous film having a uniform thickness and a uniform width is obtained.

Then the olefin-based resin film extruded from the T die is cooled until the surface temperature of the olefin-based resin film becomes equal to or lower than a temperature lower by 100°C than the melting point of the olefin-based resin. The olefin-based resin forming the olefin-based resin film is thereby crystallized, and lamellas are generated to a high degree. In the present invention, the kneaded molten olefin-based resin is extruded to orient the olefin-based resin molecules constituting the olefin-based resin film in advance, and the olefin-based resin film in this state is cooled. In this manner, the generation of lamellas is facilitated in the portions where the olefin-based resin is oriented.

The surface temperature of the cooled olefin-based resin film is preferably equal to or lower than a temperature lower by 100°C than the melting point of the olefin-based resin, more preferably lower by 140 to 110°C than the melting point of the olefin-based resin, and particularly preferably lower by 135 to 120°C than the melting point of the olefin-based resin. The cooling of the olefin-based resin film such that its surface temperature is within the above range cause the olefin-based resin to be crystallized to generate lamellas to a high degree.

(Aging step)

Next, the olefin-based resin film obtained in the extruding step described above is aged. The aging step for the olefin-based resin film is performed in order to grow the lamella generated in the olefin-based resin film in the extruding step. In this manner, a stacked lamella structure is formed. In the stacked lamella structure crystallized portions (lamellas) and non-crystallized portions are arranged alternately in the extrusion direction of the olefin-based resin film. Therefore, in the stretching steps for the olefin-based resin film described later, cracks are formed not in the lamellas but between the lamellas, and fine through-holes (micropores) starting from these cracks are formed.

In the aging step, the olefin-based resin film obtained in the extruding step is aged at a temperature equal to or higher than a temperature lower by 30°C than the melting point of the olefin-based resin and equal to or lower than a temperature lower by 1°C than the melting point of the olefin-based resin.

The aging temperature of the olefin-based resin film is preferably equal to or higher than a temperature lower by 30°C than the melting point of the olefin-based resin and equal to or lower than a temperature lower by 1°C than the melting point of the olefin-based resin and more preferably equal to or higher than a temperature lower by 25°C than the melting point of the olefin-based resin and equal to or lower than a temperature lower by 5°C than the melting point of the olefin-based resin. The setting of the aging temperature of the olefin-based resin film to a temperature equal to or higher than a temperature lower by 30°C than the melting point of the olefin-based resin sufficiently facilitates the crystallization of the olefin-based resin film. The setting of the aging temperature of the olefin-based resin film to a temperature equal to or lower than a temperature lower by 1°C than the melting point of the olefin-based resin reduce the collapse of the lamella structure due to relaxation of the molecular orientation of the olefin-based resin.

The aging temperature of the olefin-based resin film is the surface temperature of the olefin-based resin film. However, when the surface temperature of the olefin-based resin film cannot be measured, for example, when the olefin-based resin film wound into a roll is aged, the ambient temperature of the olefin-based resin film is used as the aging temperature. For example, when the olefin-based resin film wound into a roll is aged inside a heating apparatus such as a hot-air oven, the temperature inside the heating apparatus is used as the aging temperature.

The olefin-based resin film may be aged while the olefin-based resin film is running or with the olefin-based resin film wound into a roll.

When the olefin-based resin film is aged while it is running, the aging time of the olefin-based resin film is preferably 1 minute or longer and more preferably 5 minutes to 60 minutes.

When the olefin-based resin film wound into a roll is aged, the aging time is preferably 1 hour or longer and more preferably 15 hours or longer. Aging of the olefin-based resin film wound into a roll for the aging time described above allows the olefin-based resin film as a whole to be sufficiently aged at the aging temperature described above. This allows the lamellas to be sufficiently grown in the olefin-based resin film. From the viewpoint of reducing thermal degradation of the olefin-based resin film, the aging time is preferably 35 hours or shorter and more preferably 30 hours or shorter.

In the case where the olefin-based resin film wound into a roll is aged, the stretching steps and annealing step described later may be performed on the olefin-based resin film unwound from the roll of the olefin-based resin film subjected to the aging step.

(First stretching step)

Next, the olefin-based resin film after the aging step is subjected to the first stretching step in which the olefin-based resin film is uniaxially stretched at a stretching ratio of 1.2 to 1.6 and a surface temperature of -20°C or higher and lower than 100°C. In the first stretching step, it is preferable to stretch the olefin-based resin film uniaxially only in the extrusion direction. In the first stretching step, almost no lamellas in the olefin-based resin film are melted. By separating the lamellas from each other by stretching, fine cracks are independently formed in non-crystalline portions between the lamellas in an efficient manner, and a large number of micropores starting from the cracks are formed in a reliable manner.

In the first stretching step, the surface temperature of the olefin-based resin film is preferably -20°C or higher and lower than 100°C, more preferably 0 to 80°C, and particularly preferably 10 to 40°C. The surface temperature of the olefin-based resin film of -20°C or higher reduces the occurrence of breakage of the olefin-based resin film during stretching. The setting of the surface temperature of the olefin-based resin film to a temperature lower than 100°C generates cracks in the non-crystalline portions between the lamellas.

In the first stretching step, the stretching ratio of the olefin-based resin film is preferably 1.2 to 1.6 and more preferably 1.25 to 1.5. The stretching ratio of 1.2 or higher forms micropores in the non-crystalline portions between the lamellas. The stretching ratio of 1.6 or lower uniformly forms micropores in the olefin-based resin microporous film.

In the present invention, the stretching ratio of the olefin-based resin film is a value obtained by dividing the length of the olefin-based resin film after stretching by the length of the unstretched olefin-based resin film before stretching.

The stretching speed of the olefin-based resin film in the first stretching step is preferably 20%/minute or higher, more preferably 20 to 500%/minute, and particularly preferably 20 to 70%/minute. The stretching speed of 20%/minute or higher uniformly forms micropores in the non-crystalline portions between the lamellas. The stretching speed of 500%/minute or lower suppresses breakage of the olefin-based resin film in the first stretching step.

In the present invention, the stretching speed of the olefin-based resin film is the ratio of a change in dimension per unit time in the stretching direction of the olefin-based resin film.

No particular limitation is imposed on the method of stretching the olefin-based resin film in the first stretching step, so long as the olefin-based resin film can be stretched uniaxially. Examples of such a method include a method in which the olefin-based resin film is stretched uniaxially at a prescribed temperature using a uniaxial stretching apparatus.

(Second stretching step)

Next, the olefin-based resin film subjected to the first stretching step is subjected to the second stretching step. In the second stretching step the olefin-based resin film is subjected to uniaxial stretching treatment at a stretching ratio of 1.2 to 2.2 and a surface temperature of 100 to 150°C. Also in the second stretching step, it is preferable to stretch the olefin-based resin film uniaxially only in the extrusion direction. The above-described stretching treatment in the second stretching step allows a large number of micropores formed in the olefin-based resin film in the first stretching step to be grown.

In the second stretching step, the surface temperature of the olefin-based resin film is preferably 100 to 150°C and more preferably 110 to 140°C. The surface temperature of the olefin-based resin film of 100°C or higher grows the micropores formed in the olefin-based resin film in the first stretching step to a high degree. The surface temperature of the olefin-based resin film of 150°C or lower suppresses the occurrence of clogging of the micropores formed in the olefin-based resin film in the first stretching step.

In the second stretching step, the stretching ratio of the olefin-based resin film is preferably 1.2 to 2.2 and more preferably 1.5 to 2. The stretching ratio of the olefin-based resin film of 1.2 or higher grows the micropores formed in the olefin-based resin film in the first stretching step. This provides an olefin-based resin microporous film having high air permeability. The stretching ratio of the olefin-based resin film of 2.2 or lower reduces the occurrence of clogging of the micropores formed in the olefin-based resin film in the first stretching step.

In the second stretching step, the stretching speed of the olefin-based resin film is 500%/minute or lower, more preferably 400%/minute or lower, and particularly preferably 15 to 60%/minute or lower. The stretching speed of the olefin-based resin film within the above range uniformly forms micropores in the olefin-based resin film.

No particular limitation is imposed on the method of stretching the olefin-based resin film in the second stretching step, so long as the olefin-based resin film can be stretched uniaxially. Examples of such a method include a method in which the olefin-based resin film is stretched uniaxially at a prescribed temperature using a uniaxial stretching apparatus.

(Annealing step)

Next, the annealing step, in which the olefin-based resin film uniaxially stretched in the second stretching step is subjected to annealing treatment, is performed. The annealing step is performed in order to relax residual strain generated in the olefin-based resin due to stretching performed in the above-described stretching steps to thereby suppress the occurrence of thermal shrinkage in the obtained olefin-based resin microporous film.

The surface temperature of the olefin-based resin film in the annealing step is preferably equal to or higher than the surface temperature of the olefin-based resin film in the second stretching step and equal to or lower than a temperature lower by 10°C than the melting point of the olefin-based resin. The setting of the surface temperature of the olefin-based resin film to a temperature equal to or higher than the surface temperature of the olefin-based resin film in the second stretching step sufficiently reduces the residual strain in the olefin-based resin film. In this manner, the dimensional stability of the olefin-based resin microporous film during heating is improved. The setting of the surface temperature of the olefin-based resin film to a temperature equal to or lower than a temperature lower by 10°C than the melting point of the olefin-based resin suppresses the occurrence of clogging of the micropores formed in the stretching steps.

The shrinkage ratio of the olefin-based resin film in the annealing step is preferably 25% or lower. The shrinkage ratio of the olefin-based resin film of 25% or lower reduces the occurrence of slack in the olefin-based resin film, so that the olefin-based resin film is annealed uniformly.

The shrinkage ratio of the olefin-based resin film is a value obtained by dividing the shrinkage length of the olefin-based resin film in the stretching direction in the annealing step by the length of the olefin-based resin film in the stretching direction after the second stretching step and then multiplying the quotient by 100.

(Applying step)

In the method of the present invention, a radical-polymerizable monomer including a trifunctional or higher polyfunctional acrylic-based monomer is applied to the surface of the above-described synthetic resin microporous film to cause 5 to 80 parts by weight of the radical-polymerizable monomer to adhere to 100 parts by weight of the synthetic resin microporous film.

The radical-polymerizable monomer means a monomer having a functional group having a radical-polymerizable unsaturated bond that is radical-polymerizable by irradiation with ionizing radiation. The radical-polymerizable monomer includes at least a trifunctional or higher polyfunctional acrylic monomer.

The trifunctional or higher polyfunctional acrylic monomer contains three or more functional groups per molecule each having a radical-polymerizable unsaturated bond that is radical-polymerizable by irradiation with ionizing radiation as well as has an acryloyl group or a methacryloyl group. Preferably, each functional group having a radical-polymerizable unsaturated bond that is radical-polymerizable is an acryloyl group or a methacryloyl group.

The polyfunctional acrylic monomer used is a trifunctional or higher polyfunctional acrylic monomer and is preferably a trifunctional to hexafunctional acrylic monomer. Only one type of trifunctional or higher polyfunctional acrylic monomer may be used, or a combination of two or more types may be used.

No particular limitation is imposed on the trifunctional acrylic monomer, and examples thereof include trimethylolpropane tri(meth)acrylate, pentaerythritol tri(meth)acrylate, ethoxylated isocyanuric acid tri(meth)acrylate, ε-caprolactone-modified tris-(2-acryloxyethyl)isocyanurate, and ethoxylated glycerine tri(meth)acrylate. In the present invention (meth)acrylate means acrylate or methacrylate.

No particular limitation is imposed on the tetrafunctional acrylic monomer, and examples thereof include pentaerythritol tetra(meth)acrylate, ditrimethylolpropane tetra(meth)acrylate, and ethoxylated pentaerythritol tetra(meth)acrylate.

No particular limitation is imposed on the pentafunctional acrylic monomer, and examples thereof include dipentaerythritol penta(meth)acrylate.

No particular limitation is imposed on the hexafunctional acrylic monomer, and examples thereof include dipentaerythritol hexa(meth)acrylate.

Of these, trimethylolpropane tri(meth)acrylate, pentaerythritol tri(meth)acrylate, pentaerythritol tetra(meth)acrylate, dipentaerythritol hexa(meth)acrylate, and ditrimethylolpropane tetra(meth)acrylate are preferred as the trifunctional or higher polyfunctional acrylic monomer.

Preferably, the radical-polymerizable monomer further includes a bifunctional acrylic monomer. The use of a combination of the trifunctional or higher polyfunctional acrylic monomer and the bifunctional acrylic monomer moderately improves the extensibility of the coating layer, whereby the mechanical strength and heat resistance of the heat-resistant synthetic resin microporous film are improved.

The bifunctional acrylic monomer contains two functional groups per molecule each having a radical-polymerizable unsaturated bond that is radical-polymerizable by irradiation with ionizing radiation as well as has an acryloyl group or a methacryloyl group. Preferably, the functional group having a radical-polymerizable unsaturated bond that is radical-polymerizable is an acryloyl group or a methacryloyl group.

Examples of the bifunctional acrylic monomer include 1,9-nonanediol di(meth)acrylate, 1,4-butanediol di(meth)acrylate, 1,6-hexanediol di(meth)acrylate, tripropylene glycol di(meth)acrylate, 2-hydroxy-3-acryloyloxypropyl di(meth)acrylate, ethylene glycol di(meth)acrylate, diethylene glycol di(meth)acrylate, triethylene glycol di(meth)acrylate, 1,10-decanediol di(meth)acrylate, neopentyl glycol di(meth)acrylate, and glycerin di(meth)acrylate. Only one type of bifunctional acrylic monomer may be used, or a combination of two or more types may be used.

The amount of the bifunctional acrylic monomer included in the radical-polymerizable monomer is preferably 1 to 150 parts by weight relative to 100 parts by weight of the trifunctional or higher polyfunctional acrylic monomer, more preferably 5 to 125 parts by weight, particularly preferably 20 to 110 parts by weight, and most preferably 50 to 110 parts by weight. The bifunctional acrylic monomer contained in the amount within the above range moderately improves the extensibility of the coating layer, and the mechanical strength and heat resistance of the heat-resistant synthetic resin microporous film thereby are improved.

By applying the radical-polymerizable monomer including the trifunctional or higher polyfunctional acrylic monomer to the surface of the synthetic resin microporous film, the radical-polymerizable monomer is allowed to adhere to the synthetic resin microporous film. In this case, the radical-polymerizable monomer itself may be applied to the surface of the synthetic resin microporous film. However, preferably, the radical-polymerizable monomer is dispersed or dissolved in a solvent to obtain a coating solution, and this coating solution is applied to the surface of the synthetic resin microporous film.

The use of the trifunctional or higher polyfunctional acrylic monomer allows the viscosity of the coating solution to be easily adjusted to a low value. Therefore, during application, the coating solution can be preferably applied to the synthetic resin microporous film without clogging of the opening ends of the micropores. The thus-formed coating layer includes pore portions formed so as to substantially correspond to the opening ends of the micropores of the synthetic resin microporous film. Therefore, a reduction in the air permeability of the heat-resistant synthetic resin microporous film due to the formation of the coating layer is suppressed.

In addition, the viscosity of the coating solution can be adjusted to a low value. Therefore, when the coating solution is applied to the surface of the synthetic resin microporous film, the coating solution smoothly can flow along the wall surfaces of the micropores of the synthetic resin microporous film. As a result of this, the coating layer is formed not only on the surface of the synthetic resin microporous film but also on the wall surfaces of the opening end parts of the micropores that are continuous with the surface of the synthetic resin microporous film. These portions of the coating layer that extend along the wall surfaces of the opening end parts of the micropores exert an anchor effect. This allows the coating layer to be firmly integrated with the surface of the synthetic resin microporous film. Such a coating layer imparts high heat resistance to the heat-resistant synthetic resin microporous film. Therefore, even when the heat-resistant microporous film is unexpectedly exposed to heating conditions, the coating layer can suppress shrinkage and melting of the synthetic resin microporous film.

When the coating solution is applied to the upper surface of the synthetic resin microporous film, the coating solution passes through the micropores and reach the lower surface of the synthetic resin microporous film. Therefore, the coating layer is formed not only on the upper surface of the synthetic resin microporous film but also on its lower surface.

No particular limitation is imposed on the solvent used for the coating solution, so long as the solvent can dissolve or disperse the radical-polymerizable monomer. Examples of the solvent include: alcohols such as methanol, ethanol, propanol, and isopropyl alcohol; ketones such as acetone, methyl ethyl ketone, and methyl isobutyl ketone; ethers such as tetrahydrofuran and dioxane; ethyl acetate; and chloroform. Of these, ethyl acetate, ethanol, methanol, and acetone are preferred. These solvents can be smoothly removed after the coating solution is applied to the surface of the synthetic resin microporous film. In addition, the above solvents have low reactivity with an electrolyte constituting a secondary battery such as a lithium ion battery and therefore have high safety.

The content of the radical-polymerizable monomer in the coating solution is preferably 3 to 20% by weight, more preferably 3 to 15% by weight, and particularly preferably 5 to 12% by weight. The radical-polymerizable monomer contained in the amount within the above range uniformly forms the coating layer on the surface of the synthetic resin microporous film without clogging of the micropores, and therefore a heat-resistant synthetic resin microporous film having improved heat resistance is produced with no reduction in air permeability.

No particular limitation is imposed on the method of applying the radical-polymerizable monomer to the synthetic resin microporous film, and examples thereof include: (1) a method including applying the radical-polymerizable monomer to the surface of the synthetic resin microporous film; (2) a method including immersing the synthetic resin microporous film in the radical-polymerizable monomer to apply the radical-polymerizable monomer to the surface of the synthetic resin microporous film; (3) a method including dissolving or dispersing the radical-polymerizable monomer in a solvent to prepare a coating solution, applying the coating solution to the surface of the synthetic resin microporous film, and then heating the synthetic resin microporous film to remove the solvent; and (4) a method including dissolving or dispersing the radical-polymerizable monomer in a solvent to prepare a coating solution, immersing the synthetic resin microporous film in the coating solution to apply the coating solution to the synthetic resin microporous film, and then heating the synthetic resin microporous film to remove the solvent. Of these, the methods (3) and (4) are preferred. With these methods, the radical-polymerizable monomer is uniformly applied and adhered to the surface of the synthetic resin microporous film. With these methods, the applying amount of the radical-polymerizable monomer can be easily controlled.

In the above methods (3) and (4), the heating temperature of the synthetic resin microporous film for removing the solvent may be set according to the type and boiling point of the solvent used. The heating temperature of the synthetic resin microporous film for removing the solvent is preferably 50 to 140°C and more preferably 70 to 130°C. The heating temperature within the above range efficiently allows the applied solvent to be efficiently removed while the degree of thermal shrinkage of the synthetic resin microporous film and the degree of clogging of the micropores are reduced.

In the above methods (3) and (4), no particular limitation is imposed on the heating time of the synthetic resin microporous film for removing the solvent, and the heating time is set according to the type and boiling point of the solvent used. The heating time of the synthetic resin microporous film for removing the solvent is preferably 0.02 to 60 minutes and more preferably 0.1 to 30 minutes.

As described above, the application of the radical-polymerizable monomer or the coating solution to the surface of the synthetic resin microporous film allows the radical-polymerizable monomer to adhere to the surface of the synthetic resin microporous film.

The amount of the radical-polymerizable monomer adhering to the synthetic resin microporous film is limited to 5 to 80 parts by weight relative to 100 parts by weight of the synthetic resin microporous film and is preferably 7 to 50 parts by weight and more preferably 10 to 40 parts by weight. The radical-polymerizable monomer adhered in the amount within the above range uniformly forms the coating layer on the surface of the synthetic resin microporous film without clogging of the micropores. This provides a heat-resistant synthetic resin microporous film having improved heat resistance without reduction of air permeability.

(Irradiation step)

Next, in the method of the present invention, the synthetic resin microporous film, to which the radical-polymerizable monomer is applied, is irradiated with ionizing radiation at an absorbed dose of 10 to 150 kGy. The radical-polymerizable monomer is thereby polymerized. Thus, a coating layer containing the polymer of the radical-polymerizable monomer is formed integrally on at least part of the surface, preferably on the entire surface, of the synthetic resin microporous film. As described above, the coating layer is also formed on the wall surfaces of the opening end parts of the micropores that are continuous with the surface of the synthetic resin microporous film.

As described above, the coating layer contains the polymer of the radical-polymerizable monomer including the trifunctional or higher polyfunctional acrylic monomer. The use of the coating layer containing the above polymer provides a heat-resistant synthetic resin microporous film with reduced thermal shrinkage at high temperature and having high heat resistance. Since the trifunctional or higher polyfunctional acrylic monomer has a high adhesive property to the synthetic resin microporous film, the coating layer is formed without clogging of the micropores of the synthetic resin microporous film. Therefore, the formation of the coating layer on at least part of the surface of the synthetic resin microporous film imparts high heat resistance to the synthetic resin microporous film with no reduction in air permeability.

In the present invention, the radical-polymerizable monomer including the trifunctional or higher polyfunctional acrylic monomer is applied to the surface of the synthetic resin microporous film and then irradiated with ionizing radiation. In this case, since the energy of the ionizing radiation is high, the ionizing radiation also reaches the inside of the synthetic resin microporous film, and radicals are thereby generated in the synthetic resin inside the synthetic resin microporous film. This allows part of the synthetic resin and part of the polymer of the radical-polymerizable monomer to be chemically bonded to each other. The formation of such chemical bonds forms a coating layer firmly integrated with the surface of the synthetic resin microporous film. This further improves the heat resistance of the synthetic resin microporous film.

The irradiation of the synthetic resin microporous film with the ionizing radiation causes part of the synthetic resin to decompose, resulting in a reduction in its molecular weight. This facilitates stress relaxation in the synthetic resin microporous film. This stress relaxation may also effectively prevent thermal shrinkage of the heat-resistant synthetic resin microporous film at high temperature. Examples of the synthetic resin microporous film that can specifically provide such an effect include a polypropylene-based resin microporous film.

No particular limitation is imposed on the ionizing radiation, and examples thereof include ultraviolet rays, an electron beam, $\alpha$ rays, $\beta$ rays, and $\gamma$ rays. Of these, an electron beam is preferred. Since the energy of an electron beam is suitably high, irradiation with the electron beam generates a sufficient amount of radicals also in the synthetic resin of the synthetic resin microporous film, so that a large number of chemical bonds can be formed between part of the synthetic resin and part of the polymer of the radical-polymerizable monomer.

The absorbed dose of the ionizing radiation on the synthetic resin microporous film is limited to 10 to 150 kGy and is preferably 10 to 100 kGy. Excessively low absorbed dose of the ionizing radiation may not polymerize the radical-polymerizable monomer sufficiently. In this case, the heat resistance of the heat-resistant synthetic resin microporous film may not be improved sufficiently. Excessively high absorbed dose of the ionizing radiation may degrade the synthetic resin in the synthetic resin microporous film. In this case, the mechanical strength of the obtained heat-resistant synthetic resin microporous film may be reduced.

The acceleration voltage of the ionizing radiation applied to the synthetic resin microporous film is preferably 50 to 300 kV, more preferably 50 to 250 kV, and particularly preferably 50 to 100 kV. Excessively low acceleration voltage of the ionizing radiation may reduce the amount of ionizing radiation reaching the synthetic resin microporous film. In this case, chemical bonds between the synthetic resin of the synthetic resin microporous film and the polymer of the radical-polymerizable monomer may not be formed sufficiently. Excessively high acceleration voltage of the ionizing radiation may degrade the synthetic resin of the synthetic resin microporous film. In this case, the mechanical strength of the obtained heat-resistant synthetic resin microporous film may be reduced.

According to the above-described method of the present invention, a heat-resistant synthetic resin microporous film having high heat resistance is provided. This heat-resistant synthetic resin microporous film comprises:

100 parts by weight of a synthetic resin microporous film containing a synthetic resin; and
5 to 80 parts by weight of a coating layer formed on at least part of the surface of the synthetic resin microporous film, wherein
the coating layer is a polymer of a radical-polymerizable monomer including a trifunctional or higher polyfunctional acrylic monomer.

The coating layer contains the polymer of the radical-polymerizable monomer including the trifunctional or higher polyfunctional acrylic monomer. The synthetic resin microporous film and the coating layer are integrated with each other. Preferably, part of the polymer of the coating layer and part of the synthetic resin of the synthetic resin microporous film are chemically bonded to each other. The use of the coating layer containing the above polymer provides a heat-resistant synthetic resin microporous film with reduced thermal shrinkage at high temperature and having high heat resistance, as described above.

The coating layer improves the heat resistance of the heat-resistant synthetic resin microporous film significantly without using inorganic particles. Therefore, preferably, the coating layer contains no inorganic particles. Examples of the inorganic particles include inorganic particles commonly used for a porous coating layer. Examples of the material constituting the inorganic particles include $Al_2O_3$, $SiO_2$, $TiO_2$, and $MgO$.

Part of the polymer of the coating layer and part of the synthetic resin of the synthetic resin microporous film are chemically bonded to each other. No particular limitation is imposed on the chemical bonds, and examples thereof include covalent bonds, ionic bonds, and intermolecular bonds.

The amount of the coating layer contained in the heat-resistant synthetic resin microporous film is limited to 5 to 80 parts by weight relative to 100 parts by weight of the synthetic resin microporous film and is preferably 7 to 50 parts by weight and more preferably 10 to 40 parts by weight. The coating layer contained in the amount within the above range imparts high heat resistance to the obtained heat-resistant synthetic resin microporous film with no reduction in air permeability.

The gel fraction of the heat-resistant synthetic resin microporous film is preferably 5% or higher and more preferably 10% or higher. The gel fraction of 5% or higher makes the formed coating layer firm, and the degree of thermal shrinkage of the heat-resistant synthetic resin microporous film thereby is reduced. The gel fraction of the heat-resistant synthetic resin microporous film is preferably 99% or less and more preferably 60% or less. The gel fraction of 99% or less suppresses embrittlement of the heat-resistant synthetic resin microporous film.

In the present invention, the gel fraction of the heat-resistant synthetic resin microporous film is measured by the following procedure. First, the heat-resistant synthetic resin microporous film is cut to obtain a test piece of about 0.1 g. The weight [$W_1$ (g)] of the test piece is measured, and then the test piece is placed in a test tube. Next, 20 mL of xylene is poured into the test tube to immerse the entire test piece in xylene. An aluminum-made lid is put on the test tube, and the test tube is immersed in an oil bath heated to 130°C for 24 hours. The test piece is removed from the oil bath, and the contents of the test tube are immediately placed on a stainless steel-made meshed basket (#200) to filter insolubles before the temperature of the contents decreases. The weight [$W_0$ (g)] of the meshed basket is measured in advance. The meshed basket and the filter cake are dried under reduced pressure at 80°C for 7 hours, and the weight [$W_2$ (g)] of the meshed basket and the filter cake is measured. The gel fraction is computed using the following formula.

$$\texttt{Gel fraction [\%] = 100} \times \texttt{(W}_2 - \texttt{W}_0\texttt{)/W}_1$$

No particular limitation is imposed on the air permeability of the heat-resistant synthetic resin microporous film and is preferably 50 to 600 sec/100 mL and more preferably 100 to 300 sec/100 mL. As described above, in the heat-resistant synthetic resin microporous film of the present invention, the reduction in air permeability due to the formation of the coating layer is small. Therefore, the air permeability of the heat-resistant synthetic resin microporous film of the present invention falls within the above range. The air permeability of the heat-resistant synthetic resin microporous film is measured by the same method as the above-described method of measuring the air permeability of the synthetic resin microporous film.

The maximum thermal shrinkage ratio of the heat-resistant synthetic resin microporous film when this film is heated from 25°C to 180°C at a temperature increase rate of 5°C/minute is preferably 25% or less, more preferably 20% or less, and particularly preferably 5 to 17%. In the heat-resistant synthetic resin microporous film, the coating layer provides high heat resistance. Therefore, in the heat-resistant synthetic resin microporous film, the maximum thermal shrinkage ratio is 25% or less. The maximum thermal shrinkage ratio of the heat-resistant synthetic resin microporous film is measured by the same method as the method of measuring the maximum thermal shrinkage ratio of a heat-resistant homo-polypropylene microporous film in Examples described later.

The heat-resistant synthetic resin microporous film of the present invention is suitably used as a separator for a non-aqueous electrolyte secondary battery. Examples of the non-aqueous electrolyte secondary battery include a lithium ion secondary battery. Since the heat-resistant synthetic resin microporous film of the present invention has high heat resistance, the use of the heat-resistant synthetic resin microporous film as a separator provides a non-aqueous electrolyte secondary battery in which the occurrence of an electric short circuit between the electrodes is highly suppressed even when the temperature of the interior of the battery becomes high.

The non-aqueous electrolyte is an electrolyte prepared by dissolving an electrolyte salt in a solvent containing no water. Examples of the non-aqueous electrolyte used for a lithium ion secondary battery include non-aqueous electrolytes prepared by dissolving lithium salts in aprotic organic solvents. Examples of the aprotic organic solvents include solvent mixtures of cyclic carbonates such as propylene carbonate and ethylene carbonate and chain carbonates such as diethyl carbonate, methyl ethyl carbonate, and dimethyl carbonate. Examples of the lithium salts include $LiPF_6$, $LiBF_4$, $LiClO_4$, and $LiN(SO_2CF_3)_2$.

The heat-resistant synthetic resin microporous film of the present invention includes the coating layer containing the polymer of the radical-polymerizable monomer including the trifunctional or higher polyfunctional acrylic monomer. This coating layer also improves the wettability of the heat-resistant synthetic resin microporous film to the non-aqueous electrolyte. Therefore, the non-aqueous electrolyte easily enters the micropores, and the heat-resistant synthetic resin microporous film can hold a large amount of the non-aqueous electrolyte uniformly. Accordingly, the use of the heat-resistant synthetic resin microporous film as a separator provides a non-aqueous electrolyte secondary battery which is excellent in productivity and in which the degree of reduction in service life due to a reduction in electrolyte retainability (electrolyte exhaustion) is reduced. Advantageous Effects of Invention

According to the production method of the synthetic resin microporous film of the present invention, a heat-resistant synthetic resin microporous film, in which its heat resistance is improved with no reduction in ion permeability such as lithium ion permeability, is produced, as described above. Therefore, with such a heat-resistant synthetic resin microporous film, a non-aqueous electrolyte secondary battery that has reduced internal resistance and can be charged and discharged at a high current density is provided. In such a non-aqueous electrolyte secondary battery, the occurrence of an electric short circuit between the electrodes is reduced even when the temperature inside the battery becomes high because of anomalous heat generation caused by overcharging or an internal short circuit.

In the heat-resistant synthetic resin microporous film produced by the synthetic resin microporous film production method of the present invention, it is not necessary to use a porous coating layer containing inorganic particles. Therefore, the heat-resistant synthetic resin microporous film is very lightweight, and no inorganic particles fall off during the production process, so that the production line is not made dirty.

Description of Embodiments

Examples of the present invention will next be described, but the present invention is not limited to these Examples.

[Examples]

[Examples 1 to 16 and Comparative Examples 1 to 9]

1. Production of homo-polypropylene microporous film

(Extruding step)

Homo-polypropylene (weight average molecular weight: 400,000, number average molecular weight: 37,000, melt flow rate: 3.7 g/10 minutes, isotactic pentad fraction measured by $^{13}$C-NMR method: 97%, melting point: 165°C) was supplied to a single screw extruder and melted and kneaded at a resin temperature of 200°C. Next, the kneaded molten homo-polypropylene was extruded from a T die attached to the end of the single screw extruder onto a cast roll at 95°C, and cool air was blown onto the extruded homo-polypropylene to cool it until its surface temperature became 30°C. A long homo-polypropylene film (width: 200 mm) was thereby obtained. The amount of extrusion was 10 kg/hour, the film-forming rate was 22 m/minute, and the extrusion draw ratio was 83.

(Aging step)

50 m of the obtained long homo-polypropylene film was wound into a roll around a cylindrical core having an outer diameter of 3 inches to obtain a homo-polypropylene film roll. The homo-polypropylene film roll was left to stand in a hot-air oven for 24 hours to age the film roll. In the hot-air oven, the ambient temperature of the place on which the roll was placed was set to 150°C. In this case, the temperature of the homo-polypropylene film was the same as the temperature inside the hot-air oven over the entire roll from the surface to the interior.

(First stretching step)

Next, the homo-polypropylene film was unwound continuously from the roll. With the surface temperature of the homo-polypropylene film adjusted to 20°C, the homo-polypropylene film was laid over a first stretching roller and a second stretching roller in order. The first and second stretching rollers were rotated such that the circumferential velocity of the second stretching roller was larger than the circumferential velocity of the first stretching roller, whereby the homo-polypropylene film was uniaxially stretched only in the direction of conveyance direction(extrusion direction) at a stretching speed of 50%/minute to a stretching ratio of 1.4.

(Second stretching step)

Next, the homo-polypropylene film fed from the second stretching roller was supplied to a heating furnace. In a heating passage, seven stretching rollers were disposed in a zigzag manner in the conveyance direction of the homo-polypropylene film with a predetermined vertical spacing provided between the stretching rollers. The surface temperature of the homo-polypropylene film supplied to the heating furnace was adjusted to 120°C, and then the homo-polypropylene film was laid over the seven stretching rollers vertically in a zigzag manner in the conveyance direction. The stretching rollers were rotated such that their circumferential velocity gradually increased in the conveyance direction of the homo-polypropylene film, whereby the homo-polypropylene film was uniaxially stretched only in the conveyance direction at a stretching speed of 42%/minute to a stretching ratio of 2.0.

(Annealing step)

Next, the homo-polypropylene film was supplied to a first roller and then a second roller disposed vertically in a hot-air oven and conveyed in the hot-air oven for 4 minutes such that the surface temperature of the homo-polypropylene film was maintained at 155°C and no tension was applied to the homo-polypropylene film to thereby anneal the homo-polypropylene film, whereby a homo-polypropylene microporous film (thickness: 25 $\mu$m, basis weight: 11 g/m$^2$) was obtained. The shrinkage ratio of the homo-polypropylene film in the annealing step was 5%.

The obtained homo-polypropylene microporous film had an air permeability of 190 sec/100 mL and a surface porosity of 30%. The maximum major axis of the opening ends of the micropores was 530 nm, the average major axis of the opening ends of the micropores was 320 nm, and the pore density was 20/$\mu$m$^2$.

2. Formation of coating layer

(Applying step)

Any of trimethylolpropane triacrylate (TMPTA), dipentaerythritol hexaacrylate (DPHA), pentaerythritol triacrylate (PETA), pentaerythritol tetraacrylate (PETTA), ditrimethylolpropane tetraacrylate (DTMPTA), 1,9-nonanediol dimethacrylate (NDDMA), 1,4-butanediol dimethacrylate (BDDMA), tripropylene glycol diacrylate (TPGDA), trimethylolpropane trimethacrylate (TMPTMA), triallyl isocyanurate (TAIC), and divinylbenzene (DVB) in an amount shown in TABLE 1 or 2 was used as a radical-polymerizable monomer and dissolved in a prescribed amount of ethyl acetate shown in TABLE 1 or 2 to thereby prepare a coating solution. The prepared coating solution was applied to the surface of the homo-polypropylene microporous film.

In Example 11, 2.5 parts by weight of TMPTA and 2.5 parts by weight of NDDMA were used as radical-polymerizable monomers. In Example 12, 4 parts by weight of PETTA and 1 part by weight of BDDMA were used as radical-polymerizable monomers. In Example 13, 4 parts by weight of DPHA and 1 part by weight of TPGDA were used.

Then the homo-polypropylene microporous films were heated at 80°C for 2 minutes to remove ethyl acetate by evaporation. In each of the resultant homo-polypropylene microporous films, a radical-polymerizable monomer in an amount shown in TABLE 1 or 2 adhered to 100 parts by weight of the homo-polypropylene microporous film.

(Irradiation step)

Each of the homo-polypropylene microporous films was irradiated with an electron beam in a nitrogen atmosphere at an acceleration voltage and an absorbed dose shown in TABLE 1 or 2. The radical-polymerizable monomer was thereby polymerized to form a coating layer containing the polymer of the radical-polymerizable monomer over the entire surface of the homo-polypropylene microporous film in an integrated manner. Part of the homo-polypropylene contained in the homo-polypropylene microporous film and part of the polymer contained in the coating layer were chemically bonded to each other. The resultant heat-resistant homo-polypropylene microporous film had a thicknesses shown in TABLE 1 or 2. The amount (parts by weight) of the coating layer contained in the heat-resistant homo-polypropylene microporous film with respect to 100 parts by weight of the homo-polypropylene microporous film is shown in TABLE 1 or 2.

[Evaluation]

The gel fraction of each heat-resistant homo-polypropylene microporous film was measured in the above-described manner. The air permeability of each heat-resistant homo-polypropylene microporous film was measured in the same manner as in the above-described method of measuring the air permeability of the synthetic resin microporous film. The thermal shrinkage ratio and tensile fracture stress of each heat-resistant homo-polypropylene microporous film were measured in the following manners. A nail penetration test was performed on each heat-resistant homo-polypropylene microporous film in the following manner. The results are shown in TABLEs 1 and 2.

(Thermal shrinkage ratio)

A flat rectangular test piece of 3 mm width $\times$ 30 mm length was cut from a heat-resistant homo-polypropylene microporous film. In this case, the length direction (extrusion direction) of the heat-resistant homo-polypropylene microporous film was parallel to the length direction of the test piece. Opposite edges of the test piece in the length direction were held by holders, and the test piece was attached to a TMA measurement apparatus (product name "TMA-SS6000," manufactured by Seiko Instruments Inc.). In this case, the distance between the holders was 10 mm, and the holders were movable together with thermal shrinkage of the test piece. With a tension of 19.6 mN (2 gf) applied to the test piece in its length direction, the test piece was heated from 25°C to 180°C at a temperature increase rate of 5°C/minutes. The distance L (mm) between the holders was measured at each temperature point, and the thermal shrinkage ratio was computed using the following formula. The thermal shrinkage ratios at 130°C and 150°C and the maximum thermal shrinkage ratio in the measurement range of 25°C to 180°C were shown in TABLEs 1 and 2.

$$\texttt{Thermal shrinkage ratio (\%) = 100} \times \texttt{(10 - L)/10}$$

(Tensile fracture stress)

The tensile fracture stress of a heat-resistant homo-polypropylene microporous film in the extrusion direction was measured according to JIS K7127/2/300. A test piece of 10 mm width and 150 mm length was used. The distance between holders was 50 mm.

(Nail penetration test)

A positive electrode-forming composition containing nickel-cobalt-lithium manganate (1:1:1) was prepared as a positive electrode active material. The positive electrode-forming composition was applied to one side of an aluminum foil serving as a positive electrode current collector and dried to produce a positive electrode active material layer. Then the positive electrode current collector with the positive electrode active material layer formed on one side was punched to obtain flat rectangular positive electrodes of 48 mm length $\times$ 117 mm width.

Next, a negative electrode-forming composition containing natural graphite was prepared as a negative electrode active material. The negative electrode-forming composition was applied to one side of an aluminum foil serving as a negative electrode current collector and dried to produce a negative electrode active material layer. Then the negative electrode current collector with the negative electrode active material layer formed on one side was punched to obtain flat rectangular negative electrodes of 50 mm length $\times$ 121 mm width.

Then a heat-resistant homo-polypropylene microporous film was punched into a flat rectangular shape of 52 mm length $\times$ 124 mm width.

Next, ten positive electrodes and eleven negative electrodes were alternately stacked one by one with heat-resistant homo-polypropylene microporous films each interposed therebetween to obtain a stacked body. Then tab leads were joined to the respective electrodes by ultrasonic welding. After the stacked body was contained in an exterior material formed from aluminum laminated foil, the exterior material was heat-sealed to obtain a stacked element. A surface pressure of 1 kgf/cm$^2$ was applied to the obtained stacked element, and resistance measurement was performed to check that there was no short circuit.

Next, the stacked element was dried at 80°C under reduced pressure for 24 hours, and an electrolyte was poured into the stacked element in a dry box (dew point: 50°C or lower) at normal temperature and normal pressure. The electrolyte used was a LiPF$_6$ solution (1 mol/L) containing, as solvents, ethylene carbonate (E) and dimethyl carbonate (D) at a volume ratio (E:D) of 3:7. After the electrolyte was poured into the stacked element, aging, vacuum impregnation, and pre-sealing under reduced pressure were performed.

Next, the stacked element subjected to the pre-sealing under reduced pressure was stored at 20°C for 24 hours, and then initial charging was performed under the conditions of 0.2 CA, constant voltage and constant current (C.C.-C.V.), 4.2 V, and 12-hour cutoff.

Next, the stacked element was subjected to degassing under reduced pressure and then to final sealing and was aged for one week in a fully charged state (SOC 100%). Then the stacked element was subjected to initial discharging at 0.2 CA and then to 2nd charging-discharging at 0.2 CA, and a five-cycle capacity check test was performed at 1 CA. Then the alternating-current resistance (ACR) and direct-current resistance (DCR) of each cell were measured under the following conditions.

ACR (SOC 50% 1 kHz), DCR (SOC 50% 1 CA, 2 CA, 3 CA $\times$ discharging for 10 seconds)

Then the stacked element was charged under the conditions of 0.2 CA, constant voltage and constant current (C.C.-C.V.), 4.2 V, and 10-hour cut off until a fully charged state (SOC 100%) was reached. Then a nail penetration test, in which the stacked element was pierced with a nail having a thickness of $3\phi$ mm and a tip angle of 60° at a piercing rate of 10 mm/sec, was performed. "GOOD" and "POOR" in TABLEs 1 and 2 are as follows.

GOOD: No smoking and ignition were found in the stacked element after the test.
POOR: At least one of smoking and ignition was found in the stacked element after the test.

[TABLE 1]

| | | | EXAMPLE | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 |
| HOMO-POLY-PROPYL-ENE MI-CROPOROUS FILM | THICKNESS ($\mu$m) | | 25 | 25 | 25 | 25 | 25 | 25 | 25 | 25 | 25 | 25 | 25 | 25 | 25 | 25 | 25 | 25 |
| COAT-ING SO-LUTION | SOL-VENT | CONTENT OF ETHYL ACETATE (PARTS BY WEIGHT) | 95 | 95 | 95 | 97 | 80 | 95 | 95 | 95 | 95 | 95 | 95 | 95 | 95 | 95 | 95 | 95 |
| | RADI-CAL-PO-LYMER-IZABLE MONO-MER | TYPE | TMPTA | TMPTA | TMPTA | TMPTA | TMPTA | DPHA | TMPTMA | PETA | PETTA | DTMPTA | TMPTA + NDD-MA | PETTA +BDD-MA | DPHA+ TPGDA | TMPTA | TMPTA | TMPTA |
| | | CONTENT (PARTS BY WEIGHT) | 5 | 5 | 5 | 3 | 20 | 5 | 5 | 5 | 5 | 5 | 2.5+2.5 | 4+1 | 4+1 | 5 | 5 | 5 |
| AMOUNT OF RADICAL-POLYM-ERIZABLE MONOMER ADHER-ING TO HOMO-POLYPROPYL-ENE MICROPOROUS FILM (PARTS BY WEIGHT) | | | 12 | 12 | 12 | 7 | 73 | 12 | 12 | 12 | 13 | 13 | 12 | 12 | 12 | 12 | 12 | 12 |
| ELECTRON BEAM | ACCELERATION VOLTAGE(kV) | | 200 | 200 | 200 | 200 | 200 | 200 | 200 | 200 | 200 | 200 | 200 | 200 | 200 | 50 | 50 | 50 |
| | ABSORBED DOSE(kGy) | | 50 | 25 | 150 | 50 | 50 | 50 | 50 | 50 | 50 | 50 | 50 | 50 | 50 | 50 | 25 | 150 |

17

(continued)

| | | EXAMPLE | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| HEAT-RESISTANT HOMO-POLYPROPYLENE MICROPOROUS FILM | THICKNESS (μm) | 25 | 25 | 25 | 25 | 26 | 25 | 25 | 25 | 25 | 25 | 25 | 25 | 25 | 25 | 25 | 25 |
| | GEL FRACTION (%) | 28 | 10 | 31 | 20 | 48 | 16 | 25 | 28 | 30 | 30 | 19 | 17 | 20 | 27 | 9 | 31 |
| | AMOUNT OF COATING LAYER (PARTS BY WEIGHT) | 12 | 12 | 12 | 7 | 73 | 12 | 12 | 12 | 13 | 13 | 12 | 12 | 12 | 12 | 12 | 12 |
| | AIR PERMEABILITY (sec/100mL) | 195 | 195 | 195 | 190 | 580 | 195 | 195 | 195 | 205 | 205 | 195 | 195 | 195 | 195 | 195 | 195 |
| | THERMAL 130°C | 0.1 | 0.3 | 0 | 03 | 0 | 0.1 | 0.1 | 0.1 | 0.1 | 0.1 | 0.1 | 0.1 | 0.1 | 0.1 | 0.4 | 0 |
| | THERMAL 150°C | 2.2 | 6.1 | 1.7 | 6.3 | 0.9 | 2.5 | 2.8 | 2.8 | 2 | 2.1 | 2.9 | 2.8 | 2.7 | 2.5 | 7 | 1.6 |
| | MAXIMUM THERMAL SHRINKAGE RATIO (%) | 13.9 | 20.1 | 9.4 | 19.7 | 7.5 | 14.1 | 14.8 | 15 | 134 | 13.7 | 16.1 | 157 | 153 | 14 | 21.4 | 9 |
| | TENSILE FRACTURE STRESS (N/mm²) | 71 | 83 | 61 | 70 | 75 | 73 | 71 | 71 | 70 | 70 | 81 | 79 | 78 | 73 | 85 | 60 |
| | NAIL PENETRATION TEST | GOOD | GOOD | GOOD | GOOD | GOOD | GOOD | GOOD | GOOD | GOOD | GOOD | GOOD | GOOD | GOOD | GOOD | GOOD | GOOD |

[TABLE 2]

| | | | COMPARATIVE EXAMPLE | | | | | | | | |
|---|---|---|---|---|---|---|---|---|---|---|---|
| | | | 1 | 2 | 3 | 4 | 5 | 6 | 7 | 8 | 9 |
| HOMO-POLY-PROPYLENE MICROPO-ROUS FILM | THICKNESS($\mu$m) | | 25 | 25 | 25 | 25 | 25 | 25 | 25 | 25 | 25 |
| COATING SOLUTION | SOLVENT | CONTENT OF ETHYL ACETATE (PARTS BY WEIGHT) | - | 98.75 | 75 | 95 | 95 | 95 | 95 | 89.5 | 89.5 |
| | RADICAL-PO-LYMERIZA-BLE MONO-MER | TYPE | - | TMPTA | TMPTA | TMPTA | TMPTA | NDDMA | DVB | DVB | TAIC |
| | | CONTENT (PARTS BY WEIGHT) | - | 1.25 | 25 | 5 | 5 | 5 | 5 | 10.5 | 10.5 |
| AMOUNT OF RADICAL-POLYMERIZABLE MONOMER ADHERING TO HOMO-POLYPROPYLENE MICROPOROUS FILM (PARTS BY WEIGHT) | | | - | 3 | 84 | 12 | 12 | 12 | 12 | 25 | 25 |
| ELECTRON BEAM | ACCELERATION VOLTAGE(kV) | | 200 | 200 | 200 | 200 | 200 | 200 | 200 | 200 | 200 |
| | ABSORBED DOSE(kGy) | | 0 | 50 | 50 | 5 | 200 | 50 | 50 | 50 | 50 |

(continued)

| | | | COMPARATIVE EXAMPLE | | | | | | | | |
|---|---|---|---|---|---|---|---|---|---|---|---|
| | | | 1 | 2 | 3 | 4 | 5 | 6 | 7 | 8 | 9 |
| HEAT-RE-SISTANT HOMO-POLY-PROPYLENE MICROPO-ROUS FILM | THICKNESS($\mu$m) | | 25 | 25 | 26 | 25 | 25 | 25 | 25 | 25 | 25 |
| | GEL FRACTION(%) | | 0 | 6 | 51 | 1 | 33 | 2 | 1 | 1 | 1 |
| | AMOUNT OF COATING LAYER (PARTS BY WEIGHT) | | - | 3 | 84 | 12 | 12 | 12 | 12 | 25 | 25 |
| | AIR PERMEABILITY(sec/100mL) | | 190 | 190 | 1360 | 195 | 200 | 200 | 200 | 250 | 250 |
| | THERMAL SHRINKAGE RATIO(%) | 130°C | 4.2 | 2.5 | 0.1 | 3.5 | 0 | 3.2 | 3.8 | 1.9 | 3.9 |
| | | 150°C | 23.7 | 18.5 | 0.8 | 21.5 | 1.2 | 20.1 | 22.3 | 18.3 | 21.6 |
| | | MAXIMUM THERMAL SHRINKAGE RATIO | 40 OR HIGHER | 40 OR HIGHER | 7.3 | 40 OR HIGHER | 8.1 | 40 OR HIGHER | 40 OR HIGHER | 40 OR HIGHER | 40 OR HIGHER |
| | TENSILE FRACTURE STRESS(N/mm$^2$) | | 94 | 69 | 79 | 90 | 40 | 69 | 68 | 70 | 71 |
| | NAIL PENETRATION TEST | | POOR | POOR | GOOD | POOR | GOOD | POOR | POOR | POOR | POOR |

Industrial Applicability

The heat-resistant synthetic resin microporous film of the present invention is preferably used as a separator for a non-aqueous electrolyte secondary battery.

**Claims**

1. A method of producing a heat-resistant synthetic resin microporous film, comprising:

   applying a radical-polymerizable monomer including a trifunctional or higher polyfunctional acrylic monomer to a surface of a synthetic resin microporous film to thereby cause 5 to 80 parts by weight of the radical-polymerizable monomer to adhere to 100 parts by weight of the synthetic resin microporous film; and
   then irradiating the synthetic resin microporous film with ionizing radiation at an absorbed dose of 10 to 150 kGy.

2. The method of producing a heat-resistant synthetic resin microporous film according to claim 1, wherein the trifunctional or higher polyfunctional acrylic monomer is at least one selected from the group consisting of trimethylolpropane tri(meth)acrylate, pentaerythritol tri(meth)acrylate, pentaerythritol tetra(meth)acrylate, dipentaerythritol hexa(meth)acrylate, and ditrimethylolpropane tetra(meth)acrylate.

3. The method of producing a heat-resistant synthetic resin microporous film according to claim 1 or 2, wherein the radical-polymerizable monomer is dispersed or dissolved in a solvent to obtain a coating solution, and the coating solution is applied to the surface of the synthetic resin microporous film.

4. The method of producing a heat-resistant synthetic resin microporous film according to claim 3, wherein the synthetic resin microporous film to which the coating solution has been applied is heated to remove the solvent before irradiation of the synthetic resin microporous film with ionizing radiation.

5. A heat-resistant synthetic resin microporous film comprising:

   100 parts by weight of a synthetic resin microporous film containing a synthetic resin; and
   5 to 80 parts by weight of a coating layer formed on at least part of a surface of the synthetic resin microporous film, the coating layer being a polymer of a radical-polymerizable monomer including a trifunctional or higher polyfunctional acrylic monomer.

6. The heat-resistant synthetic resin microporous film according to claim 5, wherein the synthetic resin is a propylene-based resin.

7. The heat-resistant synthetic resin microporous film according to claim 5 or 6, wherein the trifunctional or higher polyfunctional acrylic monomer is at least one selected from the group consisting of trimethylolpropane tri(meth)acrylate, pentaerythritol tri(meth)acrylate, pentaerythritol tetra(meth)acrylate, dipentaerythritol hexa(meth)acrylate, and ditrimethylolpropane tetra(meth)acrylate.

8. The heat-resistant synthetic resin microporous film according to any one of claims 5 to 7, wherein the heat-resistant synthetic resin microporous film has a gel fraction of 5% or higher.

9. The heat-resistant synthetic resin microporous film according to any one of claims 5 to 8, wherein the heat-resistant synthetic resin microporous film has an air permeability of 50 to 600 sec/100 mL.

10. The heat-resistant synthetic resin microporous film according to any one of claims 5 to 9, wherein the heat-resistant synthetic resin microporous film has a maximum thermal shrinkage ratio of 25% or less when the heat-resistant synthetic resin microporous film is heated from 25°C to 180°C at a temperature increase rate of 5°C/minute.

11. A separator for a non-aqueous electrolyte secondary battery, comprising the heat-resistant synthetic resin microporous film according to any one of claims 5 to 10.

12. A non-aqueous electrolyte secondary battery comprising the separator for a non-aqueous electrolyte secondary battery according to claim 11.

## INTERNATIONAL SEARCH REPORT

| International application No. |
|---|
| PCT/JP2013/079584 |

**A. CLASSIFICATION OF SUBJECT MATTER**
*C08J9/36(2006.01)i, H01M2/16(2006.01)i*

According to International Patent Classification (IPC) or to both national classification and IPC

**B. FIELDS SEARCHED**

Minimum documentation searched (classification system followed by classification symbols)
C08J9/36, H01M2/16

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-77900 A   (Tonen Chemical Corp.),<br>25 March 1997 (25.03.1997),<br>claims<br>(Family: none) | 1–12 |
| A | JP 63-27243 A   (Dainippon Printing Co., Ltd.),<br>04 February 1988 (04.02.1988),<br>claims<br>(Family: none) | 1–12 |

| ☒ | Further documents are listed in the continuation of Box C. | ☐ | See patent family annex. |

\*       Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>    17 January, 2014 (17.01.14) | Date of mailing of the international search report<br>    28 January, 2014 (28.01.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/079584

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-121127 A  (General Electric Co.),<br>03 June 2010 (03.06.2010),<br>claims<br>& US 2009/0188857 A1<br>claims<br>& US 2009/0191399 A1     & US 2009/0191357 A1<br>& US 2009/0191398 A1     & CN 101898432 A<br>& CN 101492559 A         & CN 101492546 A | 1-12 |
| A | JP 2004-507584 A  (PTI Advanced Filtration, Inc.),<br>11 March 2004 (11.03.2004),<br>claims<br>& US 6451386 B1<br>claims<br>& WO 2002/018039 A2      & CN 1449302 A | 1-12 |
| A | JP 2000-1548 A  (Millipore Corp.),<br>07 January 2000 (07.01.2000),<br>claims<br>& US 4944879 A<br>claims<br>& JP 3-136838 A           & EP 0410357 A2 | 1-12 |
| A | JP 2012-518073 A  (3M Innovative Properties Co.),<br>09 August 2012 (09.08.2012),<br>claims<br>& US 2010/0209693 A1<br>claims<br>& US 2010/0210160 A1     & WO 2010/096429 A1<br>& KR 10-2011-0118167 A  & CN 102325584 A | 1-12 |

Form PCT/ISA/210 (continuation of second sheet) (July 2009)

**EP 2 918 631 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003022793 A
- JP HEI3193125 B
- JP 2011505663 W